# EUROPEAN PATENT APPLICATION

(11) **EP 4 510 679 A1**
(43) Date of publication of application: **19.02.2025**
(21) Application number: 23787447.4
(22) Date of filing: 10.03.2023
(51) Int. Cl.: H04W 24/02

(54) **SERVICE DATA TRANSMISSION METHOD, TERMINAL, NETWORK NODE, AND STORAGE MEDIUM**

(30) Priority: 11.04.2022 CN 202210375386
(71) Applicant: Datang Mobile Communications Equipment Co., Ltd., Beijing 100085 (CN)
(72) Inventor: CHEN, Li, Beijing 100085 (CN); ZHAO, Jinbo, Beijing 100085 (CN); SUN, Shaohui, Beijing 100085 (CN)
(74) Representative: Studio Torta S.p.A.
(86) International application number: PCT/CN2023/080783
(87) International publication number: WO 2023/197799

(57) **Abstract**

A service data transmission method, a terminal, a network node, and a storage medium are provided. The method includes: a terminal receiving a handover command; before performing a handover to a target cell, the terminal transmitting data of a first DRB in the target cell according to a configuration of a source cell; and when a data transmission of the first DRB meets a preset condition or a signaling instruction is received from the target cell, the terminal performing a process of handover to the target cell.

## Description

### CROSS REFERENCE OF RELATED APPLICATION

The present disclosure claims a priority of Chinese patent disclosure No. 202210375386.9 filed on April 11, 2022, which is incorporated herein by reference in its entirety.

### TECHNICAL FIELD

The present disclosure relates to the field of communication technology, and in particular to a service data transmission method, a terminal, a network node, and a storage medium.

### BACKGROUND

Currently, before a terminal switches from a source cell to a target cell, the terminal uses the configuration of the source cell to perform data transmission in the source cell. When the terminal receives a handover command, the terminal interrupts data transmission and uses the configuration of the target cell to update configuration parameters. After completing the handover to the target cell, the terminal performs data transmission in the target cell. This causes the transmission rate of the terminal to decrease due to the interruption of data transmission.

### SUMMARY

The embodiments of the present disclosure provide a service data transmission method, a terminal, a network node and a storage medium to solve the problem of reduced transmission rate of the terminal.

A service data transmission method is provided in the embodiment of the present disclosure, including:
a terminal receiving a handover command;
before performing a handover to a target cell, the terminal transmitting data of a first data radio bearer (DRB) in the target cell according to a configuration of a source cell; and
when a data transmission of the first DRB meets a preset condition or a signaling instruction is received from the target cell, the terminal performing a process of handover to the target cell.

Optionally, the first DRB is a bearer on which the terminal has performed a data transmission in the source cell before receiving the handover command; or
the first DRB is a bearer that the terminal has determined to start transmitting before receiving the handover command, where the terminal having determined to start transmitting includes:
data of the DRB has been buffered in the terminal, or an application layer of the terminal has initiated a transmission.

Optionally, the data transmission of the first DRB meeting the preset condition includes:
a transmission of data of the first DRB buffered in the terminal being completed.

Optionally, when the data transmission of the first DRB meets the preset condition, the terminal performing the process of handover to the target cell includes:
when the data transmission of the first DRB meets the preset condition, the terminal updating configuration parameters according to a configuration of the target cell and sending a handover completion message to the target cell.

Optionally, when the signaling instruction is received from the target cell, the terminal performing the process of handover to the target cell includes:
the terminal receiving in the target cell an ending notification of cross-cell continuous transmission, and performing the process of handover to the target cell according to the ending notification.

Optionally, the terminal receiving in the target cell an ending notification of cross-cell continuous transmission and performing the process of handover to the target cell according to the ending notification includes:
the terminal receiving in the target cell the ending notification of cross-cell continuous transmission, updating a RB configuration and updating a protocol layer configuration according to a configuration of the target cell and based on the ending notification, and sending a handover completion message to the target cell, where the updating the protocol layer configuration includes at least one of the following:
a Packet Data Convergence Protocol (PDCP) entity re-establishment, a Radio Link Control (RLC) entity re-establishment and a Media Access Control (MAC) entity re-establishment;
the handover completion message is a radio resource control (RRC) reconfiguration completion message corresponding to the handover command.

Optionally, time-frequency resources for the terminal to transmit the data of the first DRB in the target cell according to the configuration of the source cell includes:
the terminal receiving a first time-frequency resource used by a target network node for cross-cell continuous transmission which is notified by a source network node, where the source network node is a network node corresponding to a source cell, and the target network node is a network node corresponding to a target cell; or
a second time-frequency resource used by the terminal in the source cell.

Optionally, the handover command carries at least one of the following:
a cross-cell continuous transmission indication;
a configuration of cross-cell continuous transmission.

Optionally, the configuration of cross-cell continuous transmission includes at least one of the following:
time and frequency resources;
uplink transmission resources;
downlink transmission resources;
an uplink synchronization command with the target cell.

Optionally, before the terminal performs the process of handover to the target cell, the terminal does not establish a signaling radio bearer (SRB) with the target cell; or
before the terminal performs the process of handover to the target cell, the terminal establishes an SRB with the target cell and uses a DRB configured by the source cell.

Optionally, the terminal transmitting data of the first DRB in the target cell according to the configuration of the source cell includes:
the terminal transmitting the data of the first DRB to the target cell in part or all of the protocol layer, according to the configuration of the source cell.

Optionally, the terminal transmitting the data of the first DRB to the target cell in part or all of the protocol layer, according to the configuration of the source cell, including:
the terminal performing a physical layer transmission of the data of the first DRB to the target cell according to the configuration of the source cell; where, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
the terminal transmitting the data of the first DRB to the target cell based on a radio link control (RLC) entity and a media access layer (MAC) entity based on the configuration of the source cell; where, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell.

Optionally, the terminal transmitting the data of the first DRB to the target cell in all of the protocol layer according to the configuration of the source cell includes:
the terminal transmitting the data of the first DRB to the target cell according to the configuration of the source cell and based on RLC entity, MAC entity, PDCP entity and Service Data Adaptation Protocol (SDAP) entity.

A service data transmission method is provided in an embodiment of the present disclosure, including:
a target network node obtaining a configuration of a source cell corresponding to the terminal;
the target network node transmitting data of a first data radio bearer (DRB) to the terminal according to the configuration of the source cell, where the target network node is a network node corresponding to the target cell.

Optionally, the target network node transmitting data of a first data radio bearer (DRB) to the terminal according to the configuration of the source cell includes:
the target network node transmitting the data of the first DRB to the terminal in part or all of the protocol layer, according to the configuration of the source cell.

Optionally, the target network node transmitting the data of the first DRB to the terminal in part of the protocol layer, according to the configuration of the source cell includes:
the target network node performing a physical layer transmission of the data of the first DRB to the terminal according to the configuration of the source cell; where, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
the target network node establishing for the terminal a radio link control (RLC) entity and a media access layer (MAC) entity based on the configuration of the source cell, and transmitting the data of the first DRB to the terminal based on the RLC entity and the MAC entity; where, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell

Optionally, the target network node transmitting the data of the first DRB to the terminal in all of the protocol layer, according to the configuration of the source cell includes:
the target network node establishing one or more of the following protocol layers for the terminal according to the configuration of the source cell: an RLC entity, a MAC entity, a PDCP entity, and a Service Data Adaptation Protocol (SDAP) entity;
the target network node transmitting data of the first DRB to the terminal based on the RLC entity, MAC entity, PDCP entity and SDAP entity.

Optionally, time-frequency resources for the target network node to transmit the data of the first DRB to the terminal according to the configuration of the source cell includes:
a first time-frequency resource for cross-cell continuous transmission determined by the target network node, where the first time-frequency resource is notified to the source network node by the target network node, to enable the source network node to notify the terminal of the first time-frequency resource; or
a second time-frequency resource used by the terminal in the source cell, the second time-frequency resource is notified by the source network node to the target network node.

Optionally, after the target network node transmitting data of the first DRB to the terminal according to the configuration of the source cell, the method further includes:
the target network node sending a signaling instruction to the terminal to instruct the terminal to perform a process of handing over to the target cell; or
the target network node receiving a handover completion message sent by the terminal.

Optionally, the signaling instruction includes:
an ending notification of cross-cell continuous transmission.

Optionally, the method further includes:
the target network node sending an ending notification of cross-cell continuous transmission to the source network node of the source cell.

Optionally, the target network node obtaining the configuration of the source cell corresponding to the terminal includes:
the target network node receiving a handover request message sent by a source network node, where the handover request message includes the configuration of the source cell.

Optionally, before the terminal performing a process of handover to the target cell, the terminal does not establish a signaling radio bearer (SRB) with the target cell; or
before the terminal performs a process of handover to the target cell, the terminal establishes an SRB with the target cell and uses a DRB configured by the source cell.

A service data transmission method is provided in an embodiment of the present disclosure, including:
a source network node sending a configuration of a source cell corresponding to a terminal to a target network node; and
the source network node sending a handover command to the terminal.

Optionally, the method further includes:
the source network node indicating a first time-frequency resource to the terminal, where the first time-frequency resource is a first time-frequency resource used by the target network node for cross-cell continuous transmission; or
the source network node indicating, to the target network node, the second time-frequency resource used by the terminal in the source cell.

Optionally, the handover command carries at least one of the following:
a cross-cell continuous transmission indication;
a configuration of cross-cell continuous transmission.

Optionally, the configuration of cross-cell continuous transmission includes at least one of the following:
time and frequency resources;
uplink transmission resources;
downlink transmission resources;
an uplink synchronization command with the target cell.

Optionally, when the target network node performs a physical layer transmission of the data of the first data radio bearer (DRB) to the terminal according to the configuration of the source cell: for uplink, the source network node receives the transmission block transmitted by the target network node, and performs high-layer data packet processing on the transmission block; and/or, for downlink, the source network node sends an organized transmission block to the target network node; or
when the target network node establishes a radio link control (RLC) entity and a media access layer (MAC) entity for the terminal according to the configuration of the source cell; for the uplink, the source network node receives the RLC service data unit (SDU) processed by the target network node; and/or, for the downlink, the source network node transmits the organized packet data convergence protocol data unit (PDCP PDU) transmission block to the target network node.

Optionally, the source network node sending the configuration of the source cell corresponding to the terminal to the target network node includes:
the source network node sending a handover request message to the target network node, where the handover request message includes the configuration of the source cell.

A terminal is provided in the embodiment of the present disclosure, includes: a memory, a transceiver and a processor, where
the memory is configured to store a computer program; the transceiver is configured to transmit and receive data under a control of the processor; and the processor is configured to read the computer program in the memory to perform:
receiving a handover command;
before performing a handover to a target cell, transmitting data of a first data radio bearer (DRB) in the target cell according to a configuration of a source cell; and
when a data transmission of the first DRB meets a preset condition or a signaling instruction is received from the target cell, performing a process of handover to the target cell.

Optionally, the first DRB is a bearer on which the terminal has performed a data transmission in the source cell before receiving the handover command; or
the first DRB is a bearer that the terminal has determined to start transmitting before receiving the handover command, where the terminal having determined to start transmitting includes:
data of the DRB has been buffered in the terminal, or an application layer of the terminal has initiated a transmission.

Optionally, time-frequency resources for the terminal to transmit the data of the first DRB in the target cell according to the configuration of the source cell includes:
receiving a first time-frequency resource used by a target network node for cross-cell continuous transmission which is notified by a source network node, where the source network node is a network node corresponding to a source cell, and the target network node is a network node corresponding to a target cell; or
a second time-frequency resource used in the source cell.

Optionally, the transmitting data of the first DRB in the target cell according to the configuration of the source cell includes:
transmitting the data of the first DRB to the target cell in part or all of the protocol layer, according to the configuration of the source cell.

A network node is provided in an embodiment of the present disclosure, where the network node is a target network node and includes: a memory, a transceiver, and a processor, where
the memory is configured to store a computer program; the transceiver is configured to transmit and receive data under a control of the processor; and the processor is configured to read the computer program in the memory to perform:
obtaining a configuration of a source cell corresponding to the terminal;
transmitting data of a first data radio bearer (DRB) to the terminal according to the configuration of the source cell, where the target network node is a network node corresponding to the target cell.

Optionally, transmitting data of a first data radio bearer (DRB) to the terminal according to the configuration of the source cell includes:
transmitting the data of the first DRB to the terminal in part or all of the protocol layer, according to the configuration of the source cell.

A network node is provided in the embodiment of the present disclosure, where the network node is a source network node includes: a memory, a transceiver, and a processor, where,
the memory is configured to store a computer program; the transceiver is configured to transmit and receive data under a control of the processor; and the processor is configured to read the computer program in the memory to perform:
sending a configuration of a source cell corresponding to a terminal to a target network node; and
sending a handover command to the terminal.

Optionally, the processor is further configured to perform:
indicating a first time-frequency resource to the terminal, where the first time-frequency resource is a first time-frequency resource used by the target network node for cross-cell continuous transmission; or
indicating, to the target network node, the second time-frequency resource used by the terminal in the source cell.

A terminal is provided in the embodiment of the present disclosure, including:
a receiving unit, configured to receive a handover command;
a transmission unit, configured to, before performing a handover to a target cell, transmits data of a first data radio bearer (DRB) in the target cell according to a configuration of a source cell; and
an execution unit, configured to, when a data transmission of the first DRB meets a preset condition or a signaling instruction is received from the target cell, performs a process of handover to the target cell.

A network node is provided in the embodiment of the present disclosure, where the network node is a target network node and includes:
an obtaining unit, configured to obtain a configuration of a source cell corresponding to the terminal;
a transmission unit, configured to transmit data of a first data radio bearer (DRB) to the terminal according to the configuration of the source cell, where the target network node is a network node corresponding to the target cell.

A network node is provided in the embodiment of the present disclosure, where the network node is a source network node and includes:
a first sending unit, configured to send a configuration of a source cell corresponding to a terminal to a target network node; and
a second sending unit, configured to send a handover command to the terminal

A processor-readable storage medium is provided in the embodiment of the present disclosure, storing a computer program, where the computer program is configured to enable the processor to perform the service data transmission method at the terminal side, or the computer program is configured to enable the processor to perform the service data transmission method at the target network node side, or the computer program is configured to enable the processor to perform the service data transmission method at the source network node side.

In an embodiment of the present disclosure, a terminal receives a handover command; before handover to a target cell, the terminal transmits data of a first DRB in the target cell according to the configuration of the source cell; when data transmission of the first DRB meets a preset condition, or a signaling instruction is received from the target cell, the terminal performs a process of handover to the target cell. This can avoid interruption of data transmission when the terminal performs handover, thereby improving the transmission rate of the terminal.

### BRIEF DESCRIPTION OF THE DRAWINGS

Fig.1 is a schematic diagram of a network architecture applicable to the embodiment of the present disclosure;
Fig.2 is a flow chart of a method for transmitting service data provided by an embodiment of the present disclosure;
Fig.3 is a flow chart of another method for transmitting service data provided by an embodiment of the present disclosure;
Fig.4 is a flow chart of another method for transmitting service data provided by an embodiment of the present disclosure;
Fig.5 is a schematic diagram of a service data transmission provided by an embodiment of the present disclosure;
Fig.6 is a structural diagram of a terminal provided by an embodiment of the present disclosure;
Fig.7 is a structural diagram of a network node provided by an embodiment of the present disclosure;
Fig.8 is a structural diagram of another network node provided by an embodiment of the present disclosure;
Fig.9 is a structural diagram of another terminal provided by an embodiment of the present disclosure;
Fig.10 is a structural diagram of another network node provided by an embodiment of the present disclosure; and
Fig. 11 is a structural diagram of another network node provided by an embodiment of the present disclosure

### DETAILED DESCRIPTION

IIn order to make the technical problems, technical solutions and advantages to be solved by the present disclosure more clear, a detailed description will be given below with reference to the accompanying drawings and specific embodiments.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

The term "plurality" in the embodiments of the present disclosure refers to two or more than two, and other quantifiers are similar thereto.

The technical solutions in the embodiments of the present disclosure will be clearly and completely described below in conjunction with the drawings in the embodiments of the present disclosure. Obviously, the described embodiments are only part of the embodiments of the present disclosure, not all of the embodiments. Based on the embodiments in the present disclosure, all other embodiments obtained by ordinary technicians in the field without making any creative work shall fall within the scope of protection of the present disclosure.

The embodiments of the present disclosure provide a service data transmission method, a terminal, a network node and a storage medium to solve the problem of reduced transmission rate of the terminal.

The method and the device are based on the same application concept. Since the method and the device solve the problem in a similar principle, the embodiment of the device and the method can refer to each other, and the repeated parts will not be repeated.

The technical solution provided by the embodiments of the present disclosure can be applicable to a variety of systems, especially the 6th generation (6^{th} Generation, 6G) system.

For example, applicable systems may be Global System of Mobile communication (GSM) system, Code Division Multiple Access (CDMA) system, Wideband Code Division Multiple Access (WCDMA) General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave Access (WiMAX) system, 5th Generation (5^{th} Generation, 6G) New Radio (NR) system, 6G system, etc. These various systems include terminal devices and network devices. The system may also include a core network part, such as an evolved packet system (EPS), a 5G system (5^{th} Generation System, 5GS), etc.

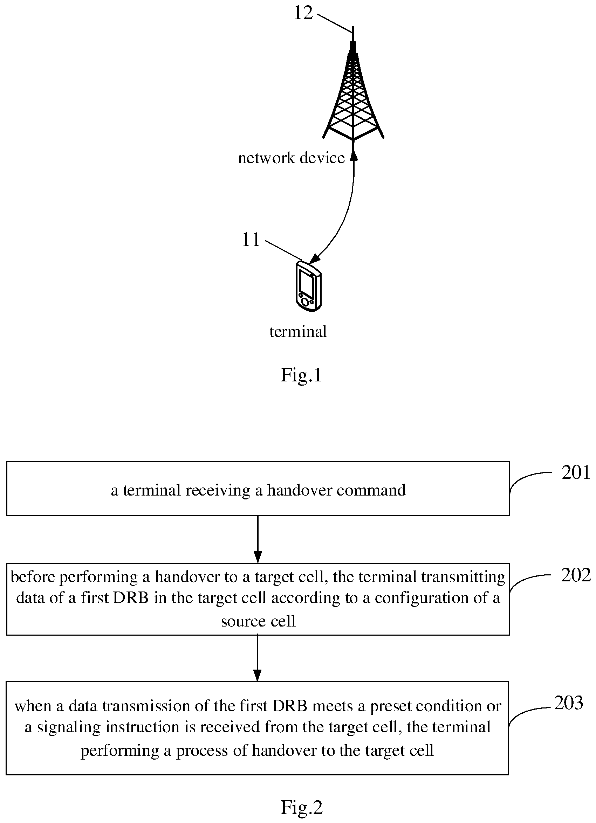

Please refer to Fig. 1, which is a schematic diagram of a network architecture applicable to the embodiment of the present disclosure. As shown in Fig. 1, the network architecture includes a terminal 11 and a network device 12, where the terminal 11 involved in the embodiment of the present disclosure may be a device that provides voice and/or data connectivity to a user, a handheld device with a wireless connection function, or other processing devices connected to a wireless modem. In different systems, the name of the terminal device may also be different. For example, in the 5G system, the terminal device can be called User Equipment (UE). Wireless terminal devices can communicate with one or more core networks (CN) via a radio access network (RAN). Wireless terminal devices can be mobile terminal devices, such as mobile phones (or "cellular" phones) and computers with mobile terminal devices, for example, portable, pocket-sized, handheld, computer-built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistants (PDA), Redcap terminals and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network device 12 involved in the embodiment of the present disclosure may be a base station, which may include multiple cells providing services for the terminal. Depending on the specific application scenario, the base station may also be called an access point, or may be a device in an access network that communicates with wireless terminal devices through one or more sectors on the air interface, or may be called by other names. The network device can be used to convert received air frames into Internet Protocol (IP) packets and vice versa, acting as a router between the wireless terminal device and the rest of the access network, wherein the rest of the access network may include an Internet Protocol (IP) communication network. The network equipment also coordinates the management of attributes of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the Long Term Evolution (LTE) system, a 5G base station (gNB) in the 5G network architecture (next generation system), a base station in 6G, or a Home evolved Node B (HeNB), a relay node, a home base station (femto), a pico base station (pico), etc., but is not limited in the embodiments of the present disclosure.

In some network structures, the network equipment may include a centralized unit (CU) and a distributed unit (DU), and the centralized unit and the distributed unit may also be arranged geographically separately. In the embodiments of the present disclosure, the target network node and the source network node may be independent network devices, or the target network node and the source network node may belong to different DUs under the same CU, for example, the source cell and the target cell belong to a DU under one CU, or the target network node and the source network node may belong to the same DU, for example, the source cell and the target cell belong to the same DU.

It should be noted that Fig. 1 is merely an example in which the target network node and the source network node belong to the same network device.

In the disclosed embodiment, the network side and the terminal may each use one or more antennas for multiple input multiple output (MIMO) transmission, and the MIMO transmission may be single user MIMO (SU-MIMO) or multi-user MIMO (MU-MIMO). Depending on the form and number of the root antenna combination, MIMO transmission can be 2D-MIMO, 3D-MIMO, full-dimensional multi-input multi-output (FD-MIMO) or massive-MIMO, or it can be diversity transmission, precoded transmission or beamforming transmission, etc.

Please refer to Fig. 2, which is a flow chart of a service data transmission method provided by an embodiment of the present disclosure. As shown in Fig. 2, the method includes the following steps:
Step 201: a terminal receiving a handover command;
Step 202: before performing a handover to a target cell, the terminal transmitting data of a first data radio bearer (DRB) in the target cell according to a configuration of a source cell;
Step 203: when a data transmission of the first DRB meets a preset condition or a signaling instruction is received from the target cell, the terminal performing a process of handover to the target cell.

The terminal may receive a handover command sent by a source network node, where the handover command may instruct the terminal to perform cross-cell continuous transmission, or the terminal may perform cross-cell continuous transmission by default.

The above-mentioned terminal transmits the data of the first DRB in the target cell according to the configuration of the source cell, which may be that the terminal and the target network node of the target cell use the configuration of the source cell to perform data transmission, and the data transmission may include at least one of uplink data transmission and downlink data transmission.

The configuration of the source cell may include a specific configuration related to the cell identity of the source cell, for example: including but not limited to at least one of the following:
Cell-Radio Network Temporary Identifier (C-RNTI), Physical Cell Identifier (PCI), and high-level secret keys.

The above-mentioned data transmission in the first DRB meets the preset condition and may include: the data transmission of the first DRB buffered in the terminal is completed However, this is not limited to this. For example, the data transmission in the first DRB meeting the preset conditions may include: the amount of data transmitted by the first DRB in the target cell reaches a preset threshold, or all data transmissions of the first DRB are completed, etc.

The above signaling instruction may be a medium access control element (MAC CE) or a physical layer control signaling, and specifically may be an indication of the end of cross-cell transmission, that is, the target cell decides to end the cross-cell continuous transmission.

In the disclosed embodiment, the above steps can realize that after receiving the handover command and before performing a handover to a target cell, the terminal performs data transmission of the first DRB in the target cell, thereby avoiding data transmission interruption during the handover process and improving the transmission rate of the terminal. For example, when a terminal needs to switch cells, the target cell completes the current service data transmission for the terminal according to the configuration of the source cell. After completing the current service data transmission, the terminal executes the handover process to the target cell to ensure that the current service data transmission is not affected by the handover process.

It should be noted that, in the embodiment of the present disclosure, the behavior of the terminal continuing to use the configuration of the source cell to transmit data cross-cell may be referred to as cross-cell continuous transmission.

Optionally, the first DRB is a bearer on which the terminal has performed a data transmission in the source cell before receiving the handover command; or
the first DRB is a bearer that the terminal has determined to start transmitting before receiving the handover command, wherein the terminal having determined to start transmitting comprises:
data of the DRB has been buffered in the terminal, or an application layer of the terminal has initiated a transmission.

This embodiment can achieve cross-cell continuous transmission of DRB data that has been transmitting data in the source cell in the target cell, and can achieve cross-cell continuous transmission of bearer data that the terminal has determined to start transmitting before receiving the handover command in the target cell.

In some embodiments, the first DRB may be the DRB that the source cell determines that the terminal needs to perform cross-cell continuous transmission and/or wants to perform cross-cell continuous transmission, and the source cell may determine to interact with the target cell for cross-cell continuous transmission configuration, and determines that the target cell can transmit service data to the terminal according to the source cell configuration.

Optionally, when the data transmission of the first DRB meets the preset condition, the terminal performing the process of handover to the target cell comprises:
when the data transmission of the first DRB meets the preset condition, the terminal updating configuration parameters according to a configuration of the target cell and sending a handover completion message to the target cell.

The terminal may update the configuration parameters according to the configuration of the target cell, which may include updating the radio bearer (RB) and each protocol layer configuration according to the configuration of the target cell, for example, including the re-establishment of the PDCP entity, the RLC entity and the MAC entity.

The above-mentioned handover completion message may be a radio resource control (Radio Resource Control, RRC) reconfiguration completion message, which may correspond to the RRC reconfiguration message of the source cell as a handover command).

In addition, after receiving the handover completion message, the target network node may notify the source cell to end the cross-cell continuous transmission.

In this embodiment, after determining that the service data transmission is completed, the terminal may update the RB configuration and each protocol layer configuration according to the target cell configuration, and the target cell may send a handover completion message, thereby terminating the cross-cell continuous transmission.

Optionally, upon receiving a signaling instruction of the target cell, the terminal performs a process of handover to the target cell, including:
the terminal receiving an ending notification of cross-cell continuous transmission in the target cell, and performing a process of handover to the target cell according to the notification of ending.

The process of executing the handover to the target cell according to the end notification may include updating configuration parameters according to the configuration of the target cell and sending a handover completion message to the target cell.

For example, the terminal receiving an ending notification of cross-cell continuous transmission in the target cell, and performing a process of handover to the target cell according to the notification of ending, includes:
the terminal receiving an ending notification of cross-cell continuous transmission in the target cell, updating RB configuration and protocol layer configuration according to the configuration of the target cell based on the notification of ending, and sending a handover completion message to the target cell.

The above-mentioned update protocol layer configuration may include at least one of the following:
PDCP entity re-establishment, RLC entity re-establishment and MAC entity re-establishment;
The above-mentioned handover completion message may be a radio resource control (RRC) reconfiguration completion message corresponding to the handover command.

In this embodiment, the target cell may notify the terminal to end cross-cell continuous transmission after determining that the service data transmission is completed. The terminal updates the RB configuration and each protocol layer configuration according to the target cell configuration based on the notification message, such as: PDCP, RLC, MAC entity re-establishment, and then sends a handover completion message to the target cell.

In addition, the target cell may notify the source cell to end the cross-cell continuous transmission according to different cross-cell continuous transmission types.

Optionally, the time-frequency resources for the terminal to transmit the data of the first DRB in the target cell according to the configuration of the source cell include:
The terminal receiving a first time-frequency resource used by a target network node for cross-cell continuous transmission which is notified by a source network node, the source network node is a network node corresponding to the source cell, and the target network node is a network node corresponding to the target cell; or
The second time-frequency resources used by the terminal in the source cell.

The above-mentioned first time-frequency resource can be determined by the target network node and notified to the source network node. Specifically, the target network node sends configuration information to the source network node to perform cross-cell continuous transmission of the terminal. The configuration information includes the above-mentioned first time-frequency resource, but does not include any configuration related to the cell-specific identifier, protocol layer configuration and DRB configuration.

For example: the target network node determines the time-frequency resources that can be used in the target cell for cross-cell continuous transmission, and notifies the source network node of the time-frequency resources in the handover request confirmation to the source cell. The source network node notifies the terminal of the time-frequency resources in the handover command or in the RRC message before the handover.

In addition, in this embodiment, the terminal may perform downlink timing synchronization and/or bandwidth part (Band Width Part, BWP) change according to the first time-frequency resource.

Since the first time-frequency resource may be determined by the target network node, this may improve the flexibility of cross-cell transmission.

The second time-frequency resource may be the time-frequency resource currently being used by the terminal. For example, the source network node notifies the target network node of the time-frequency resource currently being used by the terminal, and the target network node uses the time-frequency resource to perform cross-cell continuous transmission for the terminal.

In this embodiment, the terminal does not need to change the working frequency, which is equivalent to the source cell lending the time-frequency resources to the target cell. In addition to working on its own time-frequency resources, the target cell also needs to have the ability to work on the BWP originally used by the source cell.

Since the second time-frequency resources used by the terminal in the source cell are used, the complexity of the terminal can be reduced, and the embodiment is simple when the source cell and the target cell are networked on the same frequency.

Optionally, the handover command carries at least one of the following:
cross-cell continuous transmission indication;
a configuration of cross-cell continuous transmission.

The configuration of the above cross-cell continuous transmission may include at least one of the following:
time and frequency resources;
uplink transmission resources;
downlink transmission resources;
an uplink synchronization command with the target cell.

The above-mentioned time-frequency resources can be the above-mentioned first time-frequency resources, or pre-configured time-frequency resources for cross-cell continuous transmission, and the above-mentioned uplink transmission resources and downlink transmission resources can be semi-persistent scheduling (Semi-Persistent Scheduling, SPS) resources or configured grant (Configured Grant, CG) resources.

In this embodiment manner, by carrying the cross-cell continuous transmission indication and the cross-cell continuous transmission configuration in the above handover command, it is possible to avoid introducing additional signaling overhead.

It should be noted that, in some embodiments, the above-mentioned handover command may not carry the cross-cell continuous transmission indication and the cross-cell continuous transmission configuration, for example: the cross-cell continuous transmission is performed by default, and the default cross-cell continuous transmission configuration is used for transmission.

Optionally, before the terminal performs a process of handover to the target cell, the terminal does not establish an SRB with the target cell; or
before the terminal performs a process of handover to the target cell, the terminal establishes an SRB with the target cell and uses a DRB configured by the source cell.

The above-mentioned terminal does not establish SRB with the target cell, which means that the terminal does not establish SRB1 and SRB2 with the target cell, the target cell does not perform RRC configuration and non-access stratum (NAS) signaling transmission for the terminal, and can only perform established service data transmission, including dynamic scheduling and transmission on configured pre-configured resources. In this way, since SRB is not required, the overhead of the terminal and the target network node can be saved, and the embodiment is simple.

The above-mentioned terminal establish an SRB with the target cell, which may be that the target cell and the terminal establish an SRB, but the DRB still maintains the source cell configuration.

Optionally, the terminal transmitting the data of the first DRB in the target cell according to the configuration of the source cell includes:

The terminal transmits the data of the first DRB with the target cell in part or all of the protocol layer according to the configuration of the source cell.

The transmission of the above-mentioned partial protocol layers may be only physical layer transmission, or physical layer, MAC and RLC layer transmission. The transmission of all the above-mentioned protocol layers may be the transmission of the physical layer, MAC and RLC, PDCP and SDAP layers.

In this embodiment, since the terminal and the target cell transmit part or all of the protocol layer of the data of the first DRB, different cross-cell continuous transmission types can be supported to improve the compatibility of cross-cell transmission. For example: the target network node has the ability to identify the configuration of the source network node and adopt the parameters of the source network node to transmit with the terminal. For different types of cross-cell continuous transmission, the target network node establishes a peer entity of the layer 2 protocol stack for the terminal according to the DRB configuration and protocol layer configuration of the source cell. For the physical layer, the target network node can perform physical layer transmission according to the cell-specific identifiers such as the PCI of the source cell.

Optionally, the terminal transmitting the data of the first DRB with the target cell in part or all of the protocol layer, according to the configuration of the source cell, includes:
the terminal performs physical layer transmission of the data of the first DRB with the target cell based on the configuration of the source cell; wherein, for uplink, the target network node of the target cell passes the transmission block parsed from the physical layer data sent by the terminal to the source network node corresponding to the source cell for high-level data packet processing; and/or for downlink, the target network node receives the transmission block organized by the source network node, and sends data to the terminal based on the configuration of the source cell.

In this embodiment, the terminal and the target cell perform continuous physical layer transmission. For example, the target cell provides data transmission for the terminal according to the physical layer configuration of the source cell (for example, PCI, C-RNTI, etc.). For the uplink, the target cell receives the physical layer data sent by the terminal, parses the transmission block, and passes it to the source cell for high-level data packet processing; for the downlink, the target cell receives the transmission block organized by the source cell, and sends data to the terminal in the target cell according to the physical layer configuration of the source cell.

In this embodiment, since the terminal performs physical layer transmission of the data of the first DRB with the target cell according to the configuration of the source cell, no additional delay is added, thereby achieving the effect of reducing the delay.

In addition, since the target cell does not perform security, header compression and other functions, it has higher security.

This embodiment manner can be applied to a scenario where the source cell and the target cell belong to the same DU. Of course, other scenarios can also be applied without limitation.

Optionally, the terminal transmitting the data of the first DRB with the target cell in part or all of the protocol layer, according to the configuration of the source cell, includes:

The terminal transmits the data of the first DRB with the target cell based on the RLC entity and the MAC entity based on the configuration of the source cell; wherein, for uplink, the target network node of the target cell passes the processed RLC service data unit (SDU) to the source network node corresponding to the source cell; and/or for downlink, the target network node receives the PDCP PDU transmission block organized by the source network node, and sends data to the terminal based on the configuration of the source cell.

The above-mentioned RLC entity and MAC entity are the RLC entity and MAC entity of the terminal for the source cell.

In this embodiment, the terminal and the target cell perform continuous transmission below the PDCP layer. For example, the target cell establishes a peer RLC entity and MAC entity for the terminal according to the configuration of the source cell. For the uplink, the target cell receives the data sent by the terminal, processes it into RLC SDU, and passes it to the source cell, which performs PDCP layer functions such as decryption and decompression. For the downlink, the target cell receives the PDCP PDU (i.e., RLC SDU) transmission block organized by the source cell, and sends data to the terminal in the target cell according to the physical layer configuration of the source cell.

In this embodiment mode, since the terminal and the target cell perform continuous transmission below the PDCP layer, no additional delay is added, thereby achieving the effect of reducing the delay. In addition, since the target cell does not perform security, header compression and other functions, it has higher security.

This embodiment manner can be applied to a scenario where the source cell and the target cell belong to a DU under one CU. Of course, other scenarios can also be applied without limitation.

Optionally, the terminal transmits all protocol layers of the data of the first DRB with the target cell according to the configuration of the source cell, includes:

The terminal transmits the data of the first DRB with the target cell based on the RLC entity, the MAC entity, the PDCP entity and the SDAP entity according to the configuration of the source cell.

The above-mentioned RLC entity, MAC entity, PDCP entity and SDAP entity are the RLC entity, MAC entity, PDCP entity and SDAP entity of the terminal for the source cell, that is, there is no need to rebuild the RLC entity, MAC entity, PDCP entity and SDAP entity.

In this embodiment, the terminal and the target cell can perform continuous transmission of all user plane layers. For example, the target cell establishes equivalent SDAP, PDCP, RLC, and MAC layer entities for the terminal according to the configuration of the source cell. For the uplink, the target cell receives the terminal data transmission, parses it into high-level data (IP packets) according to the configuration of the source cell, and then directly passes it to the core network; for the downlink, the target cell can directly receive data (IP packets) from the core network, process it according to the configuration of the source cell, and send it to the terminal.

In this embodiment manner, since the terminal and the target cell perform continuous transmission of all user plane layers, data transmission efficiency can be improved.

In an embodiment of the present disclosure, a terminal receives a handover command; before handover to a target cell, the terminal transmits data of a first DRB in the target cell according to the configuration of the source cell; when data transmission of the first DRB meets a preset condition, or a signaling instruction is received from the target cell, the terminal performing a process of handover to the target cell. This can avoid interruption of data transmission when the terminal performs handover, thereby improving the transmission rate of the terminal.

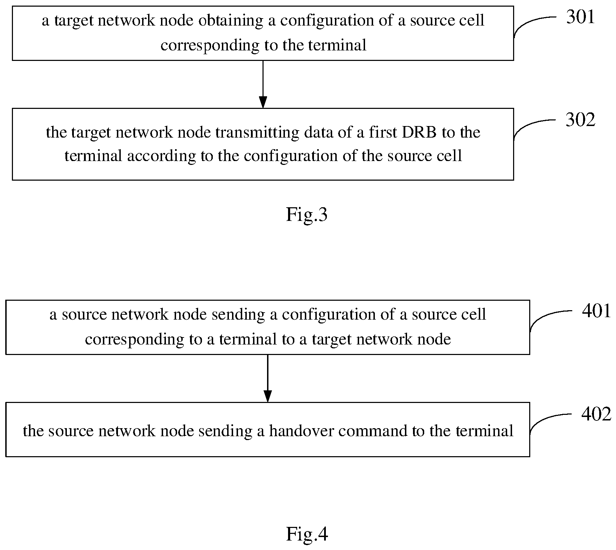

Please refer to Fig. 3, which is a flowchart of another service data transmission method provided by an embodiment of the present disclosure. As shown in Fig. 3, the method includes the following steps:
Step 301: a target network node obtaining a configuration of a source cell corresponding to the terminal;
Step 302: the target network node transmitting data of a first data radio bearer (DRB) to the terminal according to the configuration of the source cell, wherein the target network node is a network node corresponding to the target cell.

Optionally, the target network node transmitting data of a first data radio bearer (DRB) to the terminal according to the configuration of the source cell comprises:
the target network node transmitting the data of the first DRB to the terminal in part or all of the protocol layer, according to the configuration of the source cell.

Optionally, the target network node transmitting the data of the first DRB to the terminal in part of the protocol layer, according to the configuration of the source cell comprises:
the target network node performing a physical layer transmission of the data of the first DRB to the terminal according to the configuration of the source cell; wherein, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
the target network node establishing for the terminal a radio link control (RLC) entity and a media access layer (MAC) entity based on the configuration of the source cell, and transmitting the data of the first DRB to the terminal based on the RLC entity and the MAC entity; wherein, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell.

Optionally, the target network node transmitting the data of the first DRB to the terminal in all of the protocol layer, according to the configuration of the source cell comprises:
the target network node establishing one or more of the following protocol layers for the terminal according to the configuration of the source cell: an RLC entity, a MAC entity, a PDCP entity, and a Service Data Adaptation Protocol (SDAP) entity;
the target network node transmitting data of the first DRB to the terminal based on the RLC entity, MAC entity, PDCP entity and SDAP entity.

Optionally, time-frequency resources for the target network node to transmit the data of the first DRB to the terminal according to the configuration of the source cell includes:
a first time-frequency resource for cross-cell continuous transmission determined by the target network node, where the first time-frequency resource is notified to the source network node by the target network node, to enable the source network node to notify the terminal of the first time-frequency resource; or
a second time-frequency resource used by the terminal in the source cell, the second time-frequency resource is notified by the source network node to the target network node.

Optionally, after the target network node transmitting data of the first DRB to the terminal according to the configuration of the source cell, the method further includes:
the target network node sending a signaling instruction to the terminal to instruct the terminal to perform a process of handing over to the target cell; or
the target network node receiving a handover completion message sent by the terminal.

Optionally, the signaling instruction includes:
an ending notification of cross-cell continuous transmission.

Optionally, the method further includes:
the target network node sending an ending notification of cross-cell continuous transmission to the source network node of the source cell.

Optionally, the target network node obtaining the configuration of the source cell corresponding to the terminal includes:
the target network node receiving a handover request message sent by a source network node, where the handover request message includes the configuration of the source cell.

Optionally, before the terminal performing a process of handover to the target cell, the terminal does not establish a signaling radio bearer (SRB) with the target cell; or
before the terminal performs a process of handover to the target cell, the terminal establishes an SRB with the target cell and uses a DRB configured by the source cell.

It should be noted that this embodiment is an embodiment method of the target network node corresponding to the embodiment shown in Figure 2. Its specific embodiment method can refer to the relevant description of the embodiment shown in Figure 2. In order to avoid repeated description, this embodiment will not be repeated, and the same beneficial effect can still be achieved.

Please refer to Fig. 4, which is a flowchart of another service data transmission method provided by an embodiment of the present disclosure. As shown in Fig. 4, the method includes the following steps:
Step 401: a source network node sending a configuration of a source cell corresponding to a terminal to a target network node;
Step 402: the source network node sending a handover command to the terminal.

Optionally, the method further includes:
the source network node indicating a first time-frequency resource to the terminal, where the first time-frequency resource is a first time-frequency resource used by the target network node for cross-cell continuous transmission; or
the source network node indicating, to the target network node, the second time-frequency resource used by the terminal in the source cell.

Optionally, the handover command carries at least one of the following:
a cross-cell continuous transmission indication;
a configuration of cross-cell continuous transmission.

Optionally, the configuration of cross-cell continuous transmission includes at least one of the following:
time and frequency resources;
uplink transmission resources;
downlink transmission resources;
an uplink synchronization command with the target cell.

Optionally, when the target network node performs a physical layer transmission of the data of the first data radio bearer (DRB) to the terminal according to the configuration of the source cell: for uplink, the source network node receives the transmission block transmitted by the target network node, and performs high-layer data packet processing on the transmission block; and/or, for downlink, the source network node sends an organized transmission block to the target network node; or
when the target network node establishes a radio link control (RLC) entity and a media access layer (MAC) entity for the terminal according to the configuration of the source cell; for the uplink, the source network node receives the RLC service data unit (SDU) processed by the target network node; and/or, for the downlink, the source network node transmits the organized packet data convergence protocol data unit (PDCP PDU) transmission block to the target network node.

Optionally, the source network node sending the configuration of the source cell corresponding to the terminal to the target network node includes:
the source network node sending a handover request message to the target network node, where the handover request message includes the configuration of the source cell

It should be noted that this embodiment is an embodiment of the source network node corresponding to the embodiment shown in Figure 2. Its specific embodiment can refer to the relevant description of the embodiment shown in Figure 2. In order to avoid repeated description, this embodiment will not be repeated, and the same beneficial effect can still be achieved.

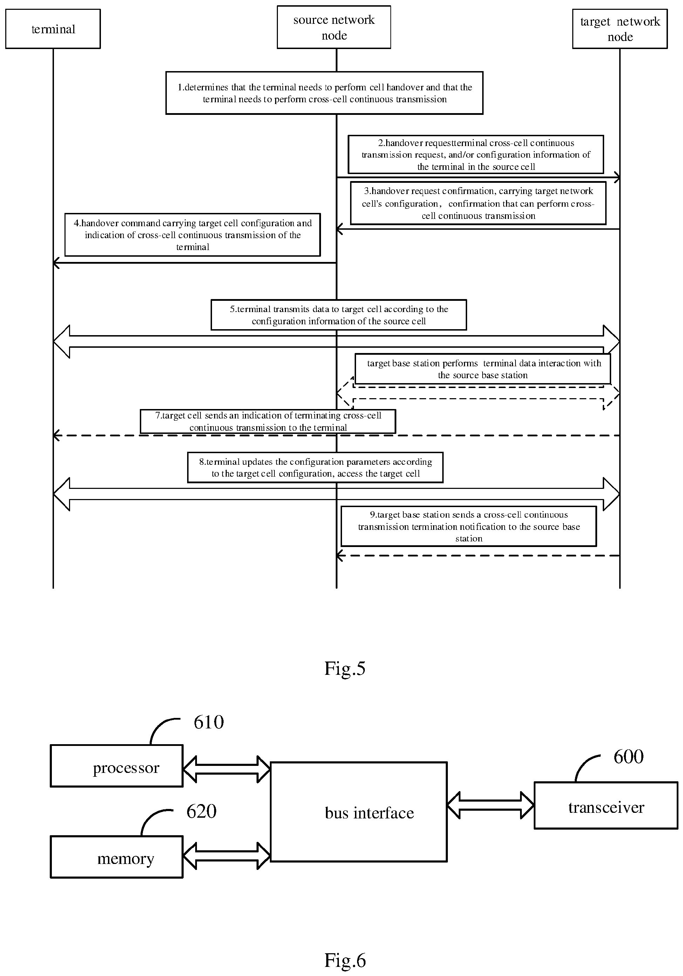

Taking the case in which the target cell and the terminal do not establish an SRB during cross-cell continuous transmission in Fig.5 as an example, the service data transmission method provided by the embodiment of the present disclosure is illustrated through multiple embodiments:

### Embodiment 1:

In this embodiment, the physical layer cross-cell continuous transmission is mainly described, and the cross-cell continuous transmission is terminated by the target cell, and an example is given according to the process shown in Fig.5:
Step 1: The source network node determines that the terminal needs to perform cell handover and that the terminal needs to perform cross-cell continuous transmission. For example, when the terminal is performing services with high latency and capacity requirements and service interruption or rate reduction is not allowed, the source network node determines that the terminal needs to perform cell handover and that the terminal needs to perform cross-cell continuous transmission.
Step 2: The source network node sends a handover request message to the target network node, which carries: a terminal cross-cell continuous transmission request, and/or configuration information of the terminal in the source cell, such as: C-RNTI, PCI and other information.
Step 3: The target network node sends a handover request confirmation message to the source network node, which includes the target network node's configuration and access information for the terminal to be switched, and also includes: confirmation that the target network node can perform cross-cell continuous transmission, and/or, the target network node's configuration information for performing cross-cell continuous transmission for the terminal, such as time-frequency resource configuration, which does not include any configuration related to the cell-specific identifier, protocol layer configuration, and DRB configuration.
Step 4: The source network node sends a handover command (such as an RRC reconfiguration message) to the terminal. In addition to the target cell configuration information, the message also carries: an indication of cross-cell continuous transmission of the terminal, and/or a configuration of cross-cell continuous transmission of the terminal. The configuration may include at least one of the following:
   Frequency bandwidth resources;
   Pre-configure uplink and downlink transmission resources (such as SPS and CG resources);
   Uplink synchronization command with the target cell.
Step 5: The terminal continues to transmit uplink and downlink data according to the configuration of the source cell. The terminal can perform downlink synchronization and uplink synchronization with the target cell according to the configuration of step 4.

The target cell establishes a MAC entity equivalent to the terminal according to the configuration of the source cell, processes the received uplink data of the terminal, and sends the downlink transmission block from the source network node.

Step 6: The target network node performs necessary terminal data interaction with the source network node.

The terminal's layer 2 protocol stack peer entity is at the source network node.

For the uplink, the target cell receives the physical layer data sent by the terminal, parses the transmission block, and passes it to the source cell for high-level data packet processing; for the downlink, the target cell receives the transmission block organized by the source cell, and sends data to the terminal in the target cell according to the physical layer configuration of the source cell.

Step 7: The target cell sends an indication of terminating cross-cell continuous transmission to the terminal. The indication may be a MAC CE or physical layer control signaling. Since no SRB is established between the target cell and the terminal during cross-cell continuous transmission, the termination message is not RRC signaling.

Step 8: The terminal updates the configuration parameters according to the target cell configuration information in the source network node handover command, and sends an RRC reconfiguration completion message to the target cell to access the target cell.

Step 9: The target network node sends a cross-cell continuous transmission termination notification to the source network node.

### Embodiment 2:

This embodiment is based on the physical layer cross-cell continuous transmission, and the terminal terminates the cross-cell continuous transmission, and is described by way of example according to the process shown in Fig.5:
Step 1: The source network node determines that the terminal needs to perform cell handover and that the terminal needs to perform cross-cell continuous transmission. For example, when the terminal is performing services with high latency and capacity requirements and service interruption or rate reduction is not allowed, the source network node determines that the terminal needs to perform cell handover and that the terminal needs to perform cross-cell continuous transmission.
Step 2: The source network node sends a handover request message to the target network node, which carries: a terminal continuous transmission request cross-cell, and/or configuration information of the terminal in the source cell, such as: C-RNTI, PCI and other information.
Step 3: The target network node sends a handover request confirmation message to the source network node, which includes the target network node's configuration and access information for the terminal to be switched, and also includes: confirmation that the target network node can perform cross-cell continuous transmission, and/or, the target network node's configuration information for performing cross-cell continuous transmission for the terminal, such as time-frequency resource configuration, which does not include any configuration related to the cell-specific identifier, protocol layer configuration, and DRB configuration.
Step 4: The source network node sends a handover command (such as an RRC reconfiguration message) to the terminal. In addition to the target cell configuration information, the message also carries: an indication of cross-cell continuous transmission of the terminal, and/or a configuration of cross-cell continuous transmission of the terminal. The configuration may include at least one of the following:
   Frequency bandwidth resources;
   Pre-configure uplink and downlink transmission resources (such as SPS and CG resources);
   Uplink synchronization command with the target cell.
Step 5: The terminal continues to perform uplink and downlink data transmission according to the configuration of the source cell. The terminal may perform downlink synchronization and uplink synchronization with the target cell according to the configuration of step 4. The target cell establishes a MAC entity equivalent to the terminal according to the configuration of the source cell, processes the received uplink data of the terminal, and sends the downlink transmission block from the source network node.
Step 6: The target network node performs necessary terminal data interaction with the source network node.

The terminal's layer 2 protocol stack peer entity is at the source network node. For the uplink, the target cell receives the physical layer data sent by the terminal, parses the transmission block TB, and passes it to the source cell for high-level data packet processing; for the downlink, the target cell receives the transmission block organized by the source cell, and sends data to the terminal in the target cell according to the physical layer configuration of the source cell.

It should be noted that this embodiment does not include step 7 in Fig. 5.

Step 8: The terminal determines that it does not need to continue cross-cell continuous transmission and reconfigures parameters according to the target cell configuration, including protocol layer reconfiguration and re-establishment. Sending an RRC reconfiguration completion message to the target cell and formally access the target cell.

Step 9: The target network node sends a cross-cell continuous transmission termination notification to the source network node.

Embodiment three:
This embodiment is described by taking the cross-cell continuous transmission below the PDCP layer and the target cell terminating the cross-cell continuous transmission as an example according to the process shown in Fig.5:
Step 1: The source network node determines that the terminal needs to perform cell handover and that the terminal needs to perform cross-cell continuous transmission. For example, when the terminal is performing services with high latency and capacity requirements and service interruption or rate reduction is not allowed, the source network node determines that the terminal needs to perform cell handover and that the terminal needs to perform cross-cell continuous transmission.
Step 2: The source network node sends a handover request message to the target network node, which carries: a request for continuous transmission of the terminal cross-cell, and/or configuration information of the terminal in the source cell, for example: physical layer information such as C-RNTI, PCI, and MAC layer and RLC layer configuration information.
Step 3: The target network node sends a handover request confirmation message to the source network node, which includes the target network node's configuration and access information for the terminal to be switched, and also includes: confirmation that the target network node can perform cross-cell continuous transmission, and/or, the target network node's configuration information for performing cross-cell continuous transmission for the terminal, such as time-frequency resource configuration, which does not include any configuration related to the cell-specific identifier, protocol layer configuration, and DRB configuration.
Step 4: The source network node sends a handover command (such as an RRC reconfiguration message) to the terminal. In addition to the target cell configuration information, the message also carries: an indication of cross-cell continuous transmission of the terminal, and/or a configuration of cross-cell continuous transmission of the terminal. The configuration may include at least one of the following:
   Frequency bandwidth resources;
   Pre-configure uplink and downlink transmission resources (such as SPS and CG resources);
   Uplink synchronization command with the target cell.
Step 5: The terminal continues to perform uplink and downlink data transmission according to the configuration of the source cell. The terminal can perform the process of downlink synchronization and uplink synchronization with the target cell according to the configuration of step 4.

The target cell establishes a MAC entity and an RLC entity equivalent to the terminal according to the configuration of the source cell, receives and parses the terminal uplink RLC SDU (ie, PDCP PDU); and sends a downlink RLC SDU (ie, PDCP PDU) from the source network node.

Step 6: The target network node performs necessary terminal data interaction with the source network node. The SDAP and PDCP peer entities of the terminal are at the source network node. For the uplink, the target cell receives the physical layer data sent by the terminal, processes it through the MAC layer and the RLC layer to obtain the RLC SDU (PDCP PDU), and passes it to the PDCP layer of the source cell for processing; for the downlink, the target cell receives the PDCP PDU (i.e., RLC SDU) of the source cell, and sends data to the terminal in the target cell according to the configuration of the source cell.

Step 7: The target cell sends an indication of terminating cross-cell continuous transmission to the terminal. The indication message may be a MAC CE or a physical layer control signaling.

Step 8: The terminal updates the configuration parameters according to the target cell configuration information in the source network node handover command, and sends an RRC reconfiguration completion message to the target cell to access the target cell.

Step 9: The target network node sends a cross-cell continuous transmission termination notification to the source network node.

### Embodiment 4:

This embodiment is based on the cross-cell continuous transmission below the PDCP layer, and the terminal terminates the cross-cell continuous transmission, and is illustrated by the process shown in Fig.5:
Step 1: The source network node determines that the terminal needs to perform cell handover and that the terminal needs to perform cross-cell continuous transmission. For example, when the terminal is performing services with high latency and capacity requirements and service interruption or rate reduction is not allowed, the source network node determines that the terminal needs to perform cell handover and that the terminal needs to perform cross-cell continuous transmission.
Step 2: The source network node sends a handover request message to the target network node, which carries: a request for continuous transmission of the terminal cross-cell, and/or configuration information of the terminal in the source cell, for example: physical layer information such as C-RNTI, PCI, and MAC layer and RLC layer configuration information.
Step 3: The target network node sends a handover request confirmation message to the source network node, which includes the target network node's configuration and access information for the terminal to be switched, and also includes: confirmation that the target network node can perform cross-cell continuous transmission, and/or, the target network node's configuration information for performing cross-cell continuous transmission for the terminal, such as time-frequency resource configuration, which does not include any configuration related to the cell-specific identifier, protocol layer configuration, and DRB configuration.
Step 4: The source network node sends a handover command (such as an RRC reconfiguration message) to the terminal. In addition to the target cell configuration information, the message also carries: an indication of cross-cell continuous transmission of the terminal, and/or a configuration of cross-cell continuous transmission of the terminal. The configuration may include at least one of the following:
   Frequency bandwidth resources;
   Pre-configure uplink and downlink transmission resources (such as SPS and CG resources);
   Uplink synchronization command with the target cell.
Step 5: The terminal continues to perform uplink and downlink data transmission according to the configuration of the source cell. The terminal can perform the process of downlink synchronization and uplink synchronization with the target cell according to the configuration of step 4.

The target cell establishes a MAC entity and an RLC entity equivalent to the terminal according to the configuration of the source cell, receives and parses the terminal uplink RLC SDU (i.e., PDCP PDU); and sends a downlink RLC SDU (ie, PDCP PDU) from the source network node.

Step 6: The target network node performs necessary terminal data interaction with the source network node.

The SDAP and PDCP peer entities of the terminal are at the source network node.

For the uplink, the target cell receives the physical layer data sent by the terminal, processes it through the MAC layer and the RLC layer to obtain the RLC SDU (PDCP PDU), and passes it to the PDCP layer of the source cell for processing; for the downlink, the target cell receives the PDCP PDU (i.e., RLC SDU) of the source cell, and sends data to the terminal in the target cell according to the configuration of the source cell.

It should be noted that this embodiment does not include step 7 in Fig. 5.

Step 8: The terminal determines that it does not need to continue cross-cell continuous transmission, and reconfigures parameters according to the target cell configuration, including protocol layer reconfiguration and re-establishment. Send an RRC reconfiguration completion message to the target cell and formally access the target cell.

Step 9: The target network node sends a cross-cell continuous transmission termination notification to the source network node.

### Embodiment five:

In this embodiment, the entire user plane is continuously transmitted cross-cell, and the target cell terminates the cross-cell continuous transmission, and an example is given according to the process shown in Fig.5:
Step 1: The source network node determines that the terminal needs to perform cell handover and that the terminal needs to perform cross-cell continuous transmission. For example, when the terminal is performing services with high latency and capacity requirements and service interruption or rate reduction is not allowed, the source network node determines that the terminal needs to perform cell handover and that the terminal needs to perform cross-cell continuous transmission.
Step 2: The source network node sends a handover request message to the target network node, which carries: a terminal continuous transmission request cross-cell, and/or configuration information of the terminal in the source cell, for example: physical layer information such as C-RNTI, PCI, and DRB configuration messages, and configuration messages of each protocol layer of the user plane (such as SDAP, PDCP, RLC, and MAC layer configuration messages).
Step 3: The target network node sends a handover request confirmation message to the source network node, which includes the target network node's configuration and access information for the terminal to be switched, and also includes: confirmation that the target network node can perform cross-cell continuous transmission, and/or, the target network node's configuration information for performing cross-cell continuous transmission on the terminal, such as time-frequency resource configuration, which does not include any configuration related to the cell-specific identifier, protocol layer configuration and DRB configuration.
Step 4: The source network node sends a handover command (such as an RRC reconfiguration message) to the terminal. In addition to the target cell configuration information, the message also carries: an indication of cross-cell continuous transmission of the terminal, and/or a configuration of cross-cell continuous transmission of the terminal. The configuration may include at least one of the following:
   Frequency bandwidth resources;
   Pre-configure uplink and downlink transmission resources (such as SPS and CG resources);
   Uplink synchronization command with the target cell.
Step 5: The terminal continues to perform uplink and downlink data transmission according to the configuration of the source cell. The terminal can perform the process of downlink synchronization and uplink synchronization with the target cell according to the configuration of step 4. The target cell establishes entities of each layer of the user plane protocol stack (SDAP, PDCP, RLC, and MAC layer entities) that are equivalent to the terminal according to the configuration of the source cell. For uplink, the target cell receives the terminal data transmission, parses it into high-level data (IP packets) according to the source cell configuration, and then directly passes it to the core network; for downlink, the target cell can directly receive data (IP packets) from the core network, process it according to the source cell configuration, and send it to the terminal.

It should be noted that this embodiment does not include step 6 in Fig. 5.

Step 7: The target cell sends an indication of terminating cross-cell continuous transmission to the terminal. The indication message may be a MAC CE or a physical layer control signaling.

Step 8: The terminal updates the configuration parameters according to the target cell configuration information in the source network node handover command, and sends an RRC reconfiguration completion message to the target cell to access the target cell.

In this embodiment, since the source cell does not need to maintain a user plane entity equivalent to the terminal, step 9 in Fig. 2 is not required.

### Embodiment six:

In this embodiment, the entire user plane is continuously transmitted cross-cell, and the terminal terminates the cross-cell continuous transmission, and an example is given according to the process shown in Fig.5:
Step 1: The source network node determines that the terminal needs to perform cell handover and that the terminal needs to perform cross-cell continuous transmission. For example, when the terminal is performing services with high latency and capacity requirements and service interruption or rate reduction is not allowed, the source network node determines that the terminal needs to perform cell handover and that the terminal needs to perform cross-cell continuous transmission.
Step 2: The source network node sends a handover request message to the target network node, which carries: a terminal continuous transmission request cross-cell, and/or configuration information of the terminal in the source cell, for example: physical layer information such as C-RNTI, PCI, and DRB configuration messages, and configuration messages of each protocol layer of the user plane (such as SDAP, PDCP, RLC, and MAC layer configuration messages).
Step 3: The target network node sends a handover request confirmation message to the source network node, which includes the target network node's configuration and access information for the terminal to be switched, and also includes: confirmation that the target network node can perform cross-cell continuous transmission, and/or, the target network node's configuration information for performing cross-cell continuous transmission for the terminal, such as time-frequency resource configuration, which does not include any configuration related to the cell-specific identifier, protocol layer configuration, and DRB configuration.
Step 4: The source network node sends a handover command (such as an RRC reconfiguration message) to the terminal. In addition to the target cell configuration information, the message also carries: an indication of cross-cell continuous transmission of the terminal, and/or a configuration of cross-cell continuous transmission of the terminal. The configuration may include at least one of the following:
   Frequency bandwidth resources;
   Pre-configure uplink and downlink transmission resources (such as SPS and CG resources);
   Uplink synchronization command with the target cell.
Step 5: The terminal continues to perform uplink and downlink data transmission according to the configuration of the source cell. The terminal can perform the process of downlink synchronization and uplink synchronization with the target cell according to the configuration of step 4.

The target cell establishes entities of each layer of the user plane protocol stack (SDAP, PDCP, RLC, and MAC layer entities) that are equivalent to the terminal according to the configuration of the source cell.

For uplink, the target cell receives the terminal data transmission, parses it into high-level data (IP packets) according to the source cell configuration, and then directly passes it to the core network; for downlink, the target cell can directly receive data (IP packets) from the core network, process it according to the source cell configuration, and send it to the terminal.

It should be noted that this embodiment does not include step 6 and step 7 in Fig. 5.

Step 8: The terminal determines that it does not need to continue cross-cell continuous transmission, and reconfigures parameters according to the target cell configuration, including protocol layer reconfiguration and re-establishment. Send an RRC reconfiguration completion message to the target cell and formally access the target cell.

It should be noted that this embodiment does not include step 9 in Fig. 5.

It should be noted that, in the above embodiments, the SRB establishment method of the target cell and the terminal is performed according to the principle of not establishing SRB during the cross-cell continuous transmission process.

If the target cell and the terminal establish an SRB, the target cell may notify the terminal to terminate cross-cell continuous transmission through the RRC signaling of the target cell.

The embodiment of the present disclosure can realize that when a terminal needs to switch cells, the target cell completes the current service data transmission for the terminal according to the configuration of the source cell, and after completing the current service data transmission, the terminal executes the process of handover to the target cell.

In this way, through the target cell's continuous transmission of the terminal cross-cell based on the source cell configuration, the continuity and transmission rate of the terminal's service transmission can be maintained during the terminal's movement.

Please refer to Fig. 6, which is a structural diagram of a terminal provided in an embodiment of the present disclosure. As shown in Fig. 6, the terminal includes a memory 620, a transceiver 600, and a processor 610:
The memory 620 is used to store computer programs; the transceiver 600 is used to send and receive data under the control of the processor 610; the processor 610 is used to read the computer program in the memory 620 and perform the following operations:
receiving a handover command;
before performing a handover to a target cell, transmitting data of a first data radio bearer (DRB) in the target cell according to a configuration of a source cell; and
when a data transmission of the first DRB meets a preset condition or a signaling instruction is received from the target cell, performing a process of handover to the target cell.

Optionally, the first DRB is a bearer on which the terminal has performed a data transmission in the source cell before receiving the handover command; or
the first DRB is a bearer that the terminal has determined to start transmitting before receiving the handover command, where the terminal having determined to start transmitting includes:
data of the DRB has been buffered in the terminal, or an application layer of the terminal has initiated a transmission.

Optionally, the data transmission of the first DRB meeting the preset condition includes:
a transmission of data of the first DRB buffered in the terminal being completed.

Optionally, when the data transmission of the first DRB meets the preset condition, the terminal performing the process of handover to the target cell includes:
when the data transmission of the first DRB meets the preset condition, the terminal updating configuration parameters according to a configuration of the target cell and sending a handover completion message to the target cell.

Optionally, when the signaling instruction is received from the target cell, the terminal performing the process of handover to the target cell includes:
the terminal receiving in the target cell an ending notification of cross-cell continuous transmission, and performing the process of handover to the target cell according to the ending notification.

Optionally, the terminal receiving in the target cell an ending notification of cross-cell continuous transmission and performing the process of handover to the target cell according to the ending notification includes:
the terminal receiving in the target cell the ending notification of cross-cell continuous transmission, updating a RB configuration and updating a protocol layer configuration according to a configuration of the target cell and based on the ending notification, and sending a handover completion message to the target cell, where the updating the protocol layer configuration includes at least one of the following:
a Packet Data Convergence Protocol (PDCP) entity re-establishment, a Radio Link Control (RLC) entity re-establishment and a Media Access Control (MAC) entity re-establishment;
the handover completion message is a radio resource control (RRC) reconfiguration completion message corresponding to the handover command.

Optionally, time-frequency resources for the terminal to transmit the data of the first DRB in the target cell according to the configuration of the source cell includes:
the terminal receiving a first time-frequency resource used by a target network node for cross-cell continuous transmission which is notified by a source network node, where the source network node is a network node corresponding to a source cell, and the target network node is a network node corresponding to a target cell; or
a second time-frequency resource used by the terminal in the source cell.

Optionally, the handover command carries at least one of the following:
a cross-cell continuous transmission indication;
a configuration of cross-cell continuous transmission.

Optionally, the configuration of cross-cell continuous transmission includes at least one of the following:
time and frequency resources;
uplink transmission resources;
downlink transmission resources;
an uplink synchronization command with the target cell.

Optionally, before the terminal performs the process of handover to the target cell, the terminal does not establish a signaling radio bearer (SRB) with the target cell; or
before the terminal performs the process of handover to the target cell, the terminal establishes an SRB with the target cell and uses a DRB configured by the source cell.

Optionally, the terminal transmitting data of the first DRB in the target cell according to the configuration of the source cell includes:
the terminal transmitting the data of the first DRB to the target cell in part or all of the protocol layer, according to the configuration of the source cell.

Optionally, the terminal transmitting the data of the first DRB to the target cell in part or all of the protocol layer, according to the configuration of the source cell, including:
the terminal performing a physical layer transmission of the data of the first DRB to the target cell according to the configuration of the source cell; where, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
the terminal transmitting the data of the first DRB to the target cell based on a radio link control (RLC) entity and a media access layer (MAC) entity based on the configuration of the source cell; where, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell.

Optionally, the terminal transmitting the data of the first DRB to the target cell in all of the protocol layer according to the configuration of the source cell includes:
the terminal transmitting the data of the first DRB to the target cell according to the configuration of the source cell and based on RLC entity, MAC entity, PDCP entity and Service Data Adaptation Protocol (SDAP) entity.

It should be noted here that the above-mentioned terminal provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

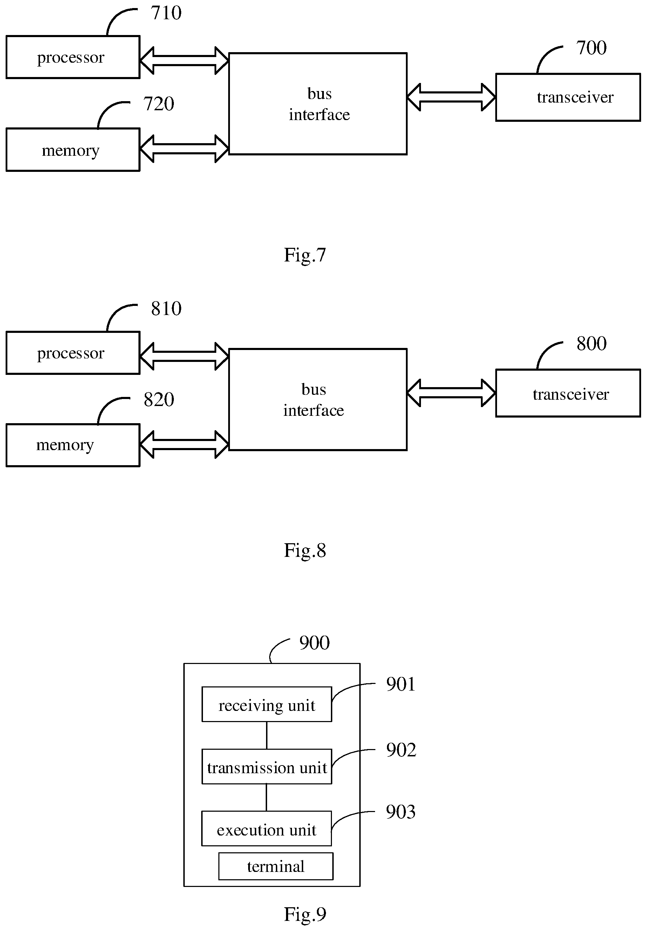

Please refer to Fig. 7, which is a structural diagram of a network node provided in an embodiment of the present disclosure. The network node is a target network node, as shown in Fig. 7, including a memory 720, a transceiver 700, and a processor 710:

The memory 720 is used to store computer programs; the transceiver 700 is used to send and receive data under the control of the processor 710; the processor 710 is used to read the computer program in the memory 720 and perform the following operations:
obtaining a configuration of a source cell corresponding to the terminal;
transmitting data of a first data radio bearer (DRB) to the terminal according to the configuration of the source cell, where the target network node is a network node corresponding to the target cell.

In Fig. 7, the bus architecture may include any number of interconnected buses and bridges, specifically one or more processors represented by processor 710 and various circuits of a memory represented by memory 720 linked together. The bus architecture may also link together various other circuits such as peripheral devices, voltage regulators, and power management circuits, which are well known in the art and therefore will not be described further herein. The bus interface provides an interface. The transceiver 700 may be a plurality of components, including a transmitter and a receiver, providing a unit for communicating with various other devices over a transmission medium, such as a wireless channel, a wired channel, an optical cable, and the like. For different user devices, the user interface 730 may also be an interface capable of externally or internally connecting required devices, and the connected devices include but are not limited to a keypad, a display, a speaker, a microphone, a joystick, and the like.

The processor 710 is responsible for managing the bus architecture and general processing, and the memory 720 can store data used by the processor 700 when performing operations.

Optionally, the processor 710 may be a central processing unit (CPU), an application specific integrated circuit (ASIC), a field programmable gate array (FPGA) or a complex programmable logic device (CPLD), and the processor may also adopt a multi-core architecture.

The processor calls the computer program stored in the memory to execute any of the methods provided in the embodiments of the present disclosure according to the obtained executable instructions.

The processor and memory may also be arranged physically separately.

Optionally, the transmitting data of a first data radio bearer (DRB) to the terminal according to the configuration of the source cell includes:
transmitting the data of the first DRB to the terminal in part or all of the protocol layer, according to the configuration of the source cell.

Optionally, the transmitting the data of the first DRB to the terminal in part of the protocol layer, according to the configuration of the source cell includes:
performing a physical layer transmission of the data of the first DRB to the terminal according to the configuration of the source cell; where, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
establishing for the terminal a radio link control (RLC) entity and a media access layer (MAC) entity based on the configuration of the source cell, and transmitting the data of the first DRB to the terminal based on the RLC entity and the MAC entity; where, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell

Optionally, the transmitting the data of the first DRB to the terminal in all of the protocol layer, according to the configuration of the source cell includes:
establishing one or more of the following protocol layers for the terminal according to the configuration of the source cell: an RLC entity, a MAC entity, a PDCP entity, and a Service Data Adaptation Protocol (SDAP) entity;
transmitting data of the first DRB to the terminal based on the RLC entity, MAC entity, PDCP entity and SDAP entity.

Optionally, time-frequency resources for the target network node to transmit the data of the first DRB to the terminal according to the configuration of the source cell includes:
a first time-frequency resource for cross-cell continuous transmission determined by the target network node, where the first time-frequency resource is notified to the source network node by the target network node, to enable the source network node to notify the terminal of the first time-frequency resource; or
a second time-frequency resource used by the terminal in the source cell, the second time-frequency resource is notified by the source network node to the target network node.

Optionally, after the target network node transmitting data of the first DRB to the terminal according to the configuration of the source cell, the processor 710 is further configured to perform:
sending a signaling instruction to the terminal to instruct the terminal to perform a process of handing over to the target cell; or
receiving a handover completion message sent by the terminal.

Optionally, the signaling instruction includes:
an ending notification of cross-cell continuous transmission.

Optionally, the method further includes:
the target network node sending an ending notification of cross-cell continuous transmission to the source network node of the source cell.

Optionally, the processor 710 is further configured to perform:
receiving a handover request message sent by a source network node, where the handover request message includes the configuration of the source cell.

Optionally, before the terminal performing a process of handover to the target cell, the terminal does not establish a signaling radio bearer (SRB) with the target cell; or
before the terminal performs a process of handover to the target cell, the terminal establishes an SRB with the target cell and uses a DRB configured by the source cell.

It should be noted here that the above-mentioned network node provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Please refer to Fig. 8, which is a structural diagram of a network node provided in an embodiment of the present disclosure. The network node is a source network node, as shown in Fig. 8, including a memory 820, a transceiver 800 and a processor 810:
The memory 820 is used to store computer programs; the transceiver 800 is used to send and receive data under the control of the processor 810; the processor 810 is used to read the computer program in the memory 820 and perform the following operations:
sending a configuration of a source cell corresponding to a terminal to a target network node; and
sending a handover command to the terminal.

In Fig. 8, the bus architecture may include any number of interconnected buses and bridges, specifically one or more processors represented by processor 810 and various circuits of a memory represented by memory 820 linked together. The bus architecture may also link together various other circuits such as peripheral devices, voltage regulators, and power management circuits, which are well known in the art and therefore will not be described further herein. The bus interface provides an interface. The transceiver 800 may be a plurality of components, including a transmitter and a receiver, providing a unit for communicating with various other devices over a transmission medium, such as a wireless channel, a wired channel, an optical cable, and the like. For different user devices, the user interface 830 may also be an interface capable of externally or internally connecting required devices, and the connected devices include but are not limited to a keypad, a display, a speaker, a microphone, a joystick, and the like.

The processor 810 is responsible for managing the bus architecture and general processing, and the memory 820 can store data used by the processor 800 when performing operations.

Optionally, the processor 810 may be a central processing unit (CPU), an application specific integrated circuit (ASIC), a field programmable gate array (FPGA) or a complex programmable logic device (CPLD), and the processor may also adopt a multi-core architecture.
he processor calls the computer program stored in the memory to execute any of the methods provided in the embodiments of the present disclosure according to the obtained executable instructions.

The processor and memory may also be arranged physically separately.

Optionally, the method further includes:
the source network node indicating a first time-frequency resource to the terminal, where the first time-frequency resource is a first time-frequency resource used by the target network node for cross-cell continuous transmission; or
the source network node indicating, to the target network node, the second time-frequency resource used by the terminal in the source cell.

Optionally, the handover command carries at least one of the following:
a cross-cell continuous transmission indication;
a configuration of cross-cell continuous transmission.

Optionally, the configuration of cross-cell continuous transmission includes at least one of the following:
time and frequency resources;
uplink transmission resources;
downlink transmission resources;
an uplink synchronization command with the target cell.

Optionally, when the target network node performs a physical layer transmission of the data of the first data radio bearer (DRB) to the terminal according to the configuration of the source cell: for uplink, the source network node receives the transmission block transmitted by the target network node, and performs high-layer data packet processing on the transmission block; and/or, for downlink, the source network node sends an organized transmission block to the target network node; or
when the target network node establishes a radio link control (RLC) entity and a media access layer (MAC) entity for the terminal according to the configuration of the source cell; for the uplink, the source network node receives the RLC service data unit (SDU) processed by the target network node; and/or, for the downlink, the source network node transmits the organized packet data convergence protocol data unit (PDCP PDU) transmission block to the target network node.

Optionally, the source network node sending the configuration of the source cell corresponding to the terminal to the target network node includes:
the source network node sending a handover request message to the target network node, where the handover request message includes the configuration of the source cell.

It should be noted here that the above-mentioned network node provided in the embodiment of the present disclosure can implement all the method steps implemented in the above-mentioned method embodiment, and can achieve the same technical effect. The parts and beneficial effects that are the same as those in the method embodiment will not be described in detail here.

Please refer to Fig. 9, which is a structural diagram of a terminal provided by an embodiment of the present disclosure. As shown in Fig. 9, a terminal 900 includes:
a receiving unit 901, configured to receive a handover command;
a transmission unit 902, configured to, before performing a handover to a target cell, transmits data of a first data radio bearer (DRB) in the target cell according to a configuration of a source cell; and
an execution unit 903, configured to, when a data transmission of the first DRB meets a preset condition or a signaling instruction is received from the target cell, performs a process of handover to the target cell.

Optionally, the first DRB is a bearer on which the terminal has performed a data transmission in the source cell before receiving the handover command; or
the first DRB is a bearer that the terminal has determined to start transmitting before receiving the handover command, where the terminal having determined to start transmitting includes:
data of the DRB has been buffered in the terminal, or an application layer of the terminal has initiated a transmission.

Optionally, the data transmission of the first DRB meeting the preset condition includes:
a transmission of data of the first DRB buffered in the terminal being completed.

Optionally, the execution unit 903 is further configured to perform:
when the data transmission of the first DRB meets the preset condition, updating configuration parameters according to a configuration of the target cell and sending a handover completion message to the target cell.

Optionally, the execution unit 903 is further configured to perform:
receiving in the target cell an ending notification of cross-cell continuous transmission, and performing the process of handover to the target cell according to the ending notification.

Optionally, the execution unit 903 is further configured to perform:
receiving in the target cell the ending notification of cross-cell continuous transmission, updating a RB configuration and updating a protocol layer configuration according to a configuration of the target cell and based on the ending notification, and sending a handover completion message to the target cell, where the updating the protocol layer configuration includes at least one of the following:
a Packet Data Convergence Protocol (PDCP) entity re-establishment, a Radio Link Control (RLC) entity re-establishment and a Media Access Control (MAC) entity re-establishment;
the handover completion message is a radio resource control (RRC) reconfiguration completion message corresponding to the handover command.

Optionally, time-frequency resources for the terminal to transmit the data of the first DRB in the target cell according to the configuration of the source cell includes:
the terminal receiving a first time-frequency resource used by a target network node for cross-cell continuous transmission which is notified by a source network node, where the source network node is a network node corresponding to a source cell, and the target network node is a network node corresponding to a target cell; or
a second time-frequency resource used by the terminal in the source cell.

Optionally, the handover command carries at least one of the following:
a cross-cell continuous transmission indication;
a configuration of cross-cell continuous transmission.

Optionally, the configuration of cross-cell continuous transmission includes at least one of the following:
time and frequency resources;
uplink transmission resources;
downlink transmission resources;
an uplink synchronization command with the target cell.

Optionally, before the terminal performs the process of handover to the target cell, the terminal does not establish a signaling radio bearer (SRB) with the target cell; or
before the terminal performs the process of handover to the target cell, the terminal establishes an SRB with the target cell and uses a DRB configured by the source cell.

Optionally, the transmission unit 902 is configured to perform:
transmitting the data of the first DRB to the target cell in part or all of the protocol layer, according to the configuration of the source cell.

Optionally, the transmission unit 902 is configured to perform:
performing a physical layer transmission of the data of the first DRB to the target cell according to the configuration of the source cell; where, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
transmitting the data of the first DRB to the target cell based on a radio link control (RLC) entity and a media access layer (MAC) entity based on the configuration of the source cell; where, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell.

Optionally, the transmission unit 902 is configured to perform:
transmitting the data of the first DRB to the target cell according to the configuration of the source cell and based on RLC entity, MAC entity, PDCP entity and Service Data Adaptation Protocol (SDAP) entity.

It should be noted here that the above-mentioned network node provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

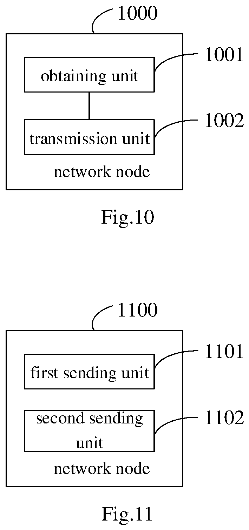

Please refer to Fig. 10, which is a structural diagram of another network node provided in an embodiment of the present disclosure. The network node is a target network node. As shown in Fig. 10, the network node 1000 includes:
an obtaining unit 1001, configured to obtain a configuration of a source cell corresponding to the terminal;
a transmission unit 1002, configured to transmit data of a first data radio bearer (DRB) to the terminal according to the configuration of the source cell, where the target network node is a network node corresponding to the target cell.

Optionally, the transmission unit 1002 is configured to:
transmitting the data of the first DRB to the terminal in part or all of the protocol layer, according to the configuration of the source cell.

Optionally, the transmission unit 1002 is configured to:
performing a physical layer transmission of the data of the first DRB to the terminal according to the configuration of the source cell; where, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
establishing for the terminal a radio link control (RLC) entity and a media access layer (MAC) entity based on the configuration of the source cell, and transmitting the data of the first DRB to the terminal based on the RLC entity and the MAC entity; where, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell

Optionally, the transmission unit 1002 is configured to:
establishing one or more of the following protocol layers for the terminal according to the configuration of the source cell: an RLC entity, a MAC entity, a PDCP entity, and a Service Data Adaptation Protocol (SDAP) entity;
the target network node transmitting data of the first DRB to the terminal based on the RLC entity, MAC entity, PDCP entity and SDAP entity.

Optionally, time-frequency resources for the target network node to transmit the data of the first DRB to the terminal according to the configuration of the source cell includes:
a first time-frequency resource for cross-cell continuous transmission determined by the target network node, where the first time-frequency resource is notified to the source network node by the target network node, to enable the source network node to notify the terminal of the first time-frequency resource; or
a second time-frequency resource used by the terminal in the source cell, the second time-frequency resource is notified by the source network node to the target network node.

Optionally, the network node further includes:
a first sending unit, configured to send a signaling instruction to the terminal to instruct the terminal to perform a process of handing over to the target cell; or
a first receiving unit, configured to receive a handover completion message sent by the terminal.

Optionally, the signaling instruction includes:
an ending notification of cross-cell continuous transmission.

Optionally, the network node further includes:
a second sending unit, configured to send an ending notification of cross-cell continuous transmission to the source network node of the source cell.

Optionally, the obtaining the configuration of the source cell corresponding to the terminal includes:
receiving a handover request message sent by a source network node, where the handover request message includes the configuration of the source cell.

Optionally, before the terminal performing a process of handover to the target cell, the terminal does not establish a signaling radio bearer (SRB) with the target cell; or
before the terminal performs a process of handover to the target cell, the terminal establishes an SRB with the target cell and uses a DRB configured by the source cell.

It should be noted here that the above-mentioned network node provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Please refer to Fig. 11, which is a structural diagram of another network node provided by an embodiment of the present disclosure. The network node is a source network node. As shown in Fig. 11, the network node 1100 includes:
a first sending unit 1101, configured to send a configuration of a source cell corresponding to a terminal to a target network node; and
a second sending unit 1102, configured to send a handover command to the terminal.

It should be noted here that the above-mentioned network node provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Optionally, the network node further includes:
a first indicating unit, configured to indicate a first time-frequency resource to the terminal, where the first time-frequency resource is a first time-frequency resource used by the target network node for cross-cell continuous transmission; or
a second indicating unit, configured to indicate, to the target network node, the second time-frequency resource used by the terminal in the source cell.

Optionally, the handover command carries at least one of the following:
a cross-cell continuous transmission indication;
a configuration of cross-cell continuous transmission.

Optionally, the configuration of cross-cell continuous transmission includes at least one of the following:
time and frequency resources;
uplink transmission resources;
downlink transmission resources;
an uplink synchronization command with the target cell.

Optionally, when the target network node performs a physical layer transmission of the data of the first data radio bearer (DRB) to the terminal according to the configuration of the source cell: for uplink, the source network node receives the transmission block transmitted by the target network node, and performs high-layer data packet processing on the transmission block; and/or, for downlink, the source network node sends an organized transmission block to the target network node; or
when the target network node establishes a radio link control (RLC) entity and a media access layer (MAC) entity for the terminal according to the configuration of the source cell; for the uplink, the source network node receives the RLC service data unit (SDU) processed by the target network node; and/or, for the downlink, the source network node transmits the organized packet data convergence protocol data unit (PDCP PDU) transmission block to the target network node.

Optionally, the sending the configuration of the source cell corresponding to the terminal to the target network node includes:
sending a handover request message to the target network node, where the handover request message includes the configuration of the source cell.

It should be noted that the division of units in the embodiments of the present disclosure is schematic and is merely a logical function division. There may be other division methods in actual embodiment. In addition, each functional unit in each embodiment of the present disclosure may be integrated into one processing unit, or each unit may exist physically separately, or two or more units may be integrated into one unit.

The above integrated unit can be implemented in the form of hardware or in the form of software functional unit. If the integrated unit is implemented in the form of a software functional unit and sold or used as an independent product, it can be stored in a processor-readable storage medium. Based on such an understanding, the technical solution of the present disclosure may essentially be the part that contributes to the relevant technology or all or part of the technical solution may be embodied in the form of a software product. The computer software product is stored in a storage medium and includes a number of instructions for enabling a computer device (which may be a personal computer, a server, or a network device, etc.) or a processor to execute all or part of the steps of the method described in each embodiment of the present disclosure. The aforementioned storage media include: U disk, mobile hard disk, read-only memory (ROM), random access memory (RAM), disk or optical disk and other media that can store program codes.

An embodiment of the present disclosure also provides a processor-readable storage medium, which stores a computer program, and the computer program is used to enable the processor to execute the service data transmission method on the terminal side provided by the embodiment of the present disclosure, or the computer program is used to enable the processor to execute the service data transmission method on the target network node side provided by the embodiment of the present disclosure, or the computer program is used to enable the processor to execute the service data transmission method on the source network node side provided by the embodiment of the present disclosure.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact discs (CD), digital video discs (DVD), Blu-ray discs (BD), high-definition versatile discs (HVD), etc.), and semiconductor storage (such as ROM, Electrical Programmable Read Only Memory (EPROM), Electrically Erasable Programmable Read Only Memory (EEPROM), non-volatile memory (NAND Flash), solid-state disk (SSD)), etc.

Those skilled in the art should appreciate that the embodiments of the present disclosure may be provided as methods, systems, or computer program products. Accordingly, the present disclosure may take the form of an entirely hardware embodiment, an entirely software embodiment, or an embodiment combining software and hardware aspects. Furthermore, the present disclosure may take the form of a computer program product implemented on one or more computer-usable storage media (including but not limited to disk storage and optical storage, etc.) containing computer-usable program codes.

The present disclosure is described with reference to flowcharts and/or block diagrams of methods, apparatus (systems), and computer program products according to embodiments of the present disclosure. It should be understood that each process and/or block in the flowchart and/or block diagram, and a combination of the processes and/or blocks in the flowchart and/or block diagram can be implemented by computer executable instructions. These computer-executable instructions can be provided to a processor of a general-purpose computer, a special-purpose computer, an embedded processing machine, or other programmable data processing device to produce a machine, so that the instructions executed by the processor of the computer or other programmable data processing device produce a device for implementing the functions specified in one or more processes in the flowchart and/or one or more blocks in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that it should be understood that the division of the above modules is only a division of logical functions. In actual embodiment, they can be fully or partially integrated into one physical entity, or they can be physically separated. And these modules can all be implemented in the form of software calling through processing elements; or all be implemented in the form of hardware; or some modules can be implemented in the form of software calling through processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The function of the above-mentioned determination module. The embodiment of other modules is similar. In addition, all or part of these modules can be integrated together or implemented independently. The processing element described here may be an integrated circuit having a signal processing capability. In the embodiment process, each step of the above method or each module above can be completed by an integrated logic circuit of hardware in a processor element or an instruction in software form.

For example, each module, unit, sub-unit or sub-module may be one or more integrated circuits configured to implement the above method, such as: one or more application specific integrated circuits (ASIC), or, one or more microprocessors (Digital Signal Processor, DSP), or, one or more field programmable gate arrays (Field Programmable Gate Array, FPGA), etc. For another example, when a certain module above is implemented in the form of scheduling program code by a processing element, the processing element may be a general-purpose processor, such as a central processing unit (CPU) or other processors that can call program code. For another example, these modules can be integrated together and implemented in the form of a system-on-a-chip (SOC).

The terms "first", "second" and the like in the description and claims of the present disclosure are used to distinguish similar objects but not necessarily to describe a particular sequence or order. It is to be understood that the terms so used are interchangeable under appropriate circumstances to enable the embodiments of the disclosure described herein to be practiced in sequences other than those illustrated or described herein. In addition, the terms "comprises," "comprising," and "having," and any variations thereof, are intended to cover non-exclusive inclusions. For example, a process, method, system, product, or apparatus that includes a series of steps or elements is not necessarily limited to those steps or elements explicitly listed, but may include other steps or elements not explicitly listed or inherent to such process, method, product, or apparatus. In addition, the use of "and/or" in the specification and claims indicates at least one of the connected objects, for example, A and/or B and/or C, indicating seven situations including A alone, B alone, C alone, and both A and B exist, both B and C exist, both A and C exist, and A, B and C exist. Similarly, the use of "at least one of A and B" in this specification and claims should be understood as "A alone, B alone, or both A and B are present."

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. A service data transmission method, comprising:
a terminal receiving a handover command;
before performing a handover to a target cell, the terminal transmitting data of a first data radio bearer (DRB) in the target cell according to a configuration of a source cell; and
when a data transmission of the first DRB meets a preset condition or a signaling instruction is received from the target cell, the terminal performing a process of handover to the target cell.

2. The method according to claim 1, wherein the first DRB is a bearer on which the terminal has performed a data transmission in the source cell before receiving the handover command; or
the first DRB is a bearer that the terminal has determined to start transmitting before receiving the handover command, wherein the terminal having determined to start transmitting comprises:
data of the DRB has been buffered in the terminal, or an application layer of the terminal has initiated a transmission.

3. The method according to claim 1, wherein the data transmission of the first DRB meeting the preset condition comprises:
a transmission of data of the first DRB buffered in the terminal being completed.

4. The method according to claim 1, wherein when the data transmission of the first DRB meets the preset condition, the terminal performing the process of handover to the target cell comprises:
when the data transmission of the first DRB meets the preset condition, the terminal updating configuration parameters according to a configuration of the target cell and sending a handover completion message to the target cell.

5. The method according to claim 1, wherein when the signaling instruction is received from the target cell, the terminal performing the process of handover to the target cell comprises:
the terminal receiving in the target cell an ending notification of cross-cell continuous transmission, and performing the process of handover to the target cell according to the ending notification.

6. The method according to claim 5, wherein the terminal receiving in the target cell an ending notification of cross-cell continuous transmission and performing the process of handover to the target cell according to the ending notification comprises:
the terminal receiving in the target cell the ending notification of cross-cell continuous transmission, updating a RB configuration and updating a protocol layer configuration according to a configuration of the target cell and based on the ending notification, and sending a handover completion message to the target cell, wherein the updating the protocol layer configuration comprises at least one of the following:
a Packet Data Convergence Protocol (PDCP) entity re-establishment, a Radio Link Control (RLC) entity re-establishment and a Media Access Control (MAC) entity re-establishment;
the handover completion message is a radio resource control (RRC) reconfiguration completion message corresponding to the handover command.

7. The method according to claim 1, wherein time-frequency resources for the terminal to transmit the data of the first DRB in the target cell according to the configuration of the source cell comprises:
the terminal receiving a first time-frequency resource used by a target network node for cross-cell continuous transmission which is notified by a source network node, wherein the source network node is a network node corresponding to a source cell, and the target network node is a network node corresponding to a target cell; or
a second time-frequency resource used by the terminal in the source cell.

8. The method according to any one of claims 1 to 7, wherein the handover command carries at least one of the following:
a cross-cell continuous transmission indication;
a configuration of cross-cell continuous transmission.

9. The method according to claim 8, wherein the configuration of cross-cell continuous transmission comprises at least one of the following:
time and frequency resources;
uplink transmission resources;
downlink transmission resources;
an uplink synchronization command with the target cell.

10. The method according to any one of claims 1 to 7, wherein before the terminal performs the process of handover to the target cell, the terminal does not establish a signaling radio bearer (SRB) with the target cell; or
before the terminal performs the process of handover to the target cell, the terminal establishes an SRB with the target cell and uses a DRB configured by the source cell.

11. The method according to any one of claims 1 to 7, wherein the terminal transmitting data of the first DRB in the target cell according to the configuration of the source cell comprises:
the terminal transmitting the data of the first DRB to the target cell in part or all of the protocol layer, according to the configuration of the source cell.

12. The method according to claim 11, wherein the terminal transmitting the data of the first DRB to the target cell in part or all of the protocol layer, according to the configuration of the source cell, comprising:
the terminal performing a physical layer transmission of the data of the first DRB to the target cell according to the configuration of the source cell; wherein, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
the terminal transmitting the data of the first DRB to the target cell based on a radio link control (RLC) entity and a media access layer (MAC) entity based on the configuration of the source cell; wherein, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell.

13. The method according to claim 11, wherein the terminal transmitting the data of the first DRB to the target cell in all of the protocol layer according to the configuration of the source cell comprises:
the terminal transmitting the data of the first DRB to the target cell according to the configuration of the source cell and based on RLC entity, MAC entity, PDCP entity and Service Data Adaptation Protocol (SDAP) entity.

14. A service data transmission method, comprising:
a target network node obtaining a configuration of a source cell corresponding to the terminal;
the target network node transmitting data of a first data radio bearer (DRB) to the terminal according to the configuration of the source cell, wherein the target network node is a network node corresponding to the target cell.

15. The method according to claim 14, wherein the target network node transmitting data of a first data radio bearer (DRB) to the terminal according to the configuration of the source cell comprises:
the target network node transmitting the data of the first DRB to the terminal in part or all of the protocol layer, according to the configuration of the source cell.

16. The method according to claim 14, wherein the target network node transmitting the data of the first DRB to the terminal in part of the protocol layer, according to the configuration of the source cell comprises:
the target network node performing a physical layer transmission of the data of the first DRB to the terminal according to the configuration of the source cell; wherein, for uplink, the target network node of the target cell transmits a transmission block parsed from physical layer data sent by the terminal to a source network node corresponding to the source cell for high-level data packet processing; and/or for downlink, the target network node receives transmission block organized by the source network node, and sends data to the terminal according to the configuration of the source cell; or
the target network node establishing for the terminal a radio link control (RLC) entity and a media access layer (MAC) entity based on the configuration of the source cell, and transmitting the data of the first DRB to the terminal based on the RLC entity and the MAC entity; wherein, for uplink, the target network node of the target cell transmits the processed RLC service data unit (SDU) to the source network node corresponding to the source cell; and/or for downlink, the target network node receives the packet data convergence protocol data unit (PDCP PDU) transmission block organized by the source network node, and sends data to the terminal according to the configuration of the source cell.

17. The method according to claim 14, wherein the target network node transmitting the data of the first DRB to the terminal in all of the protocol layer, according to the configuration of the source cell comprises:
the target network node establishing one or more of the following protocol layers for the terminal according to the configuration of the source cell: an RLC entity, a MAC entity, a PDCP entity, and a Service Data Adaptation Protocol (SDAP) entity;
the target network node transmitting data of the first DRB to the terminal based on the RLC entity, MAC entity, PDCP entity and SDAP entity.

18. The method according to any one of claims 14 to 17, wherein time-frequency resources for the target network node to transmit the data of the first DRB to the terminal according to the configuration of the source cell comprises:
a first time-frequency resource for cross-cell continuous transmission determined by the target network node, wherein the first time-frequency resource is notified to the source network node by the target network node, to enable the source network node to notify the terminal of the first time-frequency resource; or
a second time-frequency resource used by the terminal in the source cell, the second time-frequency resource is notified by the source network node to the target network node.

19. The method according to any one of claims 14 to 17, wherein after the target network node transmitting data of the first DRB to the terminal according to the configuration of the source cell, the method further comprises:
the target network node sending a signaling instruction to the terminal to instruct the terminal to perform a process of handing over to the target cell; or
the target network node receiving a handover completion message sent by the terminal.

20. The method according to claim 19, wherein the signaling instruction comprises:
an ending notification of cross-cell continuous transmission.

21. The method according to claim 19, further comprising:
the target network node sending an ending notification of cross-cell continuous transmission to the source network node of the source cell.

22. The method according to any one of claims 14 to 17, wherein the target network node obtaining the configuration of the source cell corresponding to the terminal comprises:
the target network node receiving a handover request message sent by a source network node, wherein the handover request message comprises the configuration of the source cell.

23. The method according to any one of claims 14 to 17, wherein before the terminal performing a process of handover to the target cell, the terminal does not establish a signaling radio bearer (SRB) with the target cell; or
before the terminal performs a process of handover to the target cell, the terminal establishes an SRB with the target cell and uses a DRB configured by the source cell.

24. A service data transmission method, comprising:
a source network node sending a configuration of a source cell corresponding to a terminal to a target network node; and
the source network node sending a handover command to the terminal.

25. The method according to claim 24, further comprising:
the source network node indicating a first time-frequency resource to the terminal, wherein the first time-frequency resource is a first time-frequency resource used by the target network node for cross-cell continuous transmission; or
the source network node indicating, to the target network node, the second time-frequency resource used by the terminal in the source cell.

26. The method according to claim 24, wherein the handover command carries at least one of the following:
a cross-cell continuous transmission indication;
a configuration of cross-cell continuous transmission.

27. The method of claim 26, wherein the configuration of cross-cell continuous transmission comprises at least one of the following:
time and frequency resources;
uplink transmission resources;
downlink transmission resources;
an uplink synchronization command with the target cell.

28. The method according to any one of claims 24 to 27, wherein when the target network node performs a physical layer transmission of the data of the first data radio bearer (DRB) to the terminal according to the configuration of the source cell: for uplink, the source network node receives the transmission block transmitted by the target network node, and performs high-layer data packet processing on the transmission block; and/or, for downlink, the source network node sends an organized transmission block to the target network node; or
when the target network node establishes a radio link control (RLC) entity and a media access layer (MAC) entity for the terminal according to the configuration of the source cell; for the uplink, the source network node receives the RLC service data unit (SDU) processed by the target network node; and/or, for the downlink, the source network node transmits the organized packet data convergence protocol data unit (PDCP PDU) transmission block to the target network node.

29. The method according to any one of claims 24 to 27, wherein the source network node sending the configuration of the source cell corresponding to the terminal to the target network node comprises:
the source network node sending a handover request message to the target network node, wherein the handover request message comprises the configuration of the source cell.

30. A terminal, comprising: a memory, a transceiver and a processor, wherein
the memory is configured to store a computer program; the transceiver is configured to transmit and receive data under a control of the processor; and the processor is configured to read the computer program in the memory to perform:
receiving a handover command;
before performing a handover to a target cell, transmitting data of a first data radio bearer (DRB) in the target cell according to a configuration of a source cell; and
when a data transmission of the first DRB meets a preset condition or a signaling instruction is received from the target cell, performing a process of handover to the target cell.

31. The terminal according to claim 30, wherein the first DRB is a bearer on which the terminal has performed a data transmission in the source cell before receiving the handover command; or
the first DRB is a bearer that the terminal has determined to start transmitting before receiving the handover command, wherein the terminal having determined to start transmitting comprises:
data of the DRB has been buffered in the terminal, or an application layer of the terminal has initiated a transmission.

32. The terminal according to claim 30, wherein time-frequency resources for the terminal to transmit the data of the first DRB in the target cell according to the configuration of the source cell comprises:
receiving a first time-frequency resource used by a target network node for cross-cell continuous transmission which is notified by a source network node, wherein the source network node is a network node corresponding to a source cell, and the target network node is a network node corresponding to a target cell; or
a second time-frequency resource used in the source cell.

33. The terminal according to any one of claims 30 to 32, wherein the transmitting data of the first DRB in the target cell according to the configuration of the source cell comprises:
transmitting the data of the first DRB to the target cell in part or all of the protocol layer, according to the configuration of the source cell.

34. A network node, wherein the network node is a target network node and comprises: a memory, a transceiver, and a processor, wherein
the memory is configured to store a computer program; the transceiver is configured to transmit and receive data under a control of the processor; and the processor is configured to read the computer program in the memory to perform:
obtaining a configuration of a source cell corresponding to the terminal;
transmitting data of a first data radio bearer (DRB) to the terminal according to the configuration of the source cell, wherein the target network node is a network node corresponding to the target cell.

35. The network node of claim 34, wherein transmitting data of a first data radio bearer (DRB) to the terminal according to the configuration of the source cell comprises:
transmitting the data of the first DRB to the terminal in part or all of the protocol layer, according to the configuration of the source cell.

36. A network node, wherein the network node is a source network node comprises: a memory, a transceiver, and a processor, wherein,
the memory is configured to store a computer program; the transceiver is configured to transmit and receive data under a control of the processor; and the processor is configured to read the computer program in the memory to perform:
sending a configuration of a source cell corresponding to a terminal to a target network node; and
sending a handover command to the terminal.

37. The network node of claim 36, wherein the processor is further configured to perform:
indicating a first time-frequency resource to the terminal, wherein the first time-frequency resource is a first time-frequency resource used by the target network node for cross-cell continuous transmission; or
indicating, to the target network node, the second time-frequency resource used by the terminal in the source cell.

38. A terminal, comprising:
a receiving unit, configured to receive a handover command;
a transmission unit, configured to, before performing a handover to a target cell, transmits data of a first data radio bearer (DRB) in the target cell according to a configuration of a source cell; and
an execution unit, configured to, when a data transmission of the first DRB meets a preset condition or a signaling instruction is received from the target cell, performs a process of handover to the target cell.

39. A network node, wherein the network node is a target network node and comprises:
an obtaining unit, configured to obtain a configuration of a source cell corresponding to the terminal;
a transmission unit, configured to transmit data of a first data radio bearer (DRB) to the terminal according to the configuration of the source cell, wherein the target network node is a network node corresponding to the target cell.

40. A network node, wherein the network node is a source network node and comprises:
a first sending unit, configured to send a configuration of a source cell corresponding to a terminal to a target network node; and
a second sending unit, configured to send a handover command to the terminal.

41. A processor-readable storage medium, storing a computer program, wherein the computer program is configured to enable the processor to perform the service data transmission method according to any one of claims 1 to 13, or the computer program is configured to enable the processor to perform the service data transmission method according to any one of claims 14 to 23, or the computer program is configured to enable the processor to perform the service data transmission method according to any one of claims 24 to 29.
